# EUROPÄISCHE PATENTANMELDUNG

(11) **EP 0 853 981 A1**
(43) Veröffentlichungstag der Anmeldung: **22.07.1998**
(21) Anmeldenummer: 98100341.1
(22) Anmeldetag: 10.01.1998
(51) Int. Cl.: B05C 9/10, B29B 7/74, B01F 5/06

(54) **Verfahren zum Bereitstellen und Verarbeiten einer Zweikomponentenmasse und Mühle zur Durchführung des Verfahrens**

(30) Priorität: 16.01.1997 DE 19701279; 04.09.1997 DE 19738662
(71) Anmelder: Scheiff GmbH, 53881 Euskirchen (DE)
(72) Erfinder: Hille, Albrecht, Dr., 52076 Aachen (DE)
(74) Vertreter: Selting, Günther, Dipl.-Ing.

(57) **Zusammenfassung**

Bei einem Verfahren zum Bereitstellen und Verarbeiten einer Zweikomponentenmasse werden die Komponenten vor dem Auftragen vermischt. Eine der beiden Komponenten, vorzugsweise der Härter, ist verkapselt, so daß das Vermischen dadurch erfolgt, daß die verkapselte Komponente in einer Mühle aufgebrochen und die beiden Komponenten vermischt werden. Anschließend wird die gemischte Zweikomponentenmasse von der Mühle an ein Werkzeug zum Auftragen der aushärtenden Zweikomponentenmasse weitertransportiert. Die Mühle weist einen rotierenden Mahlkörper (22) auf. Die dem Mahlkörper (22) zugewandten Enden eines Zuführ- (21) und Auslaßkanals (34) sind zu dem Mahlkörper (22) komplementär ausgebildet. Die verkapselte Komponente der Zweikomponentenmasse wird in dem engen Mahlspalt zwischen den Kanalenden und dem Mahlkörper (22) sowie in dem engen Mahlspalt zwischen Mahlkörper (22) und Gegenstück (26) aufgebrochen.

## Beschreibung

Die Erfindung betrifft ein Verfahren zum Bereitstellen und Verarbeiten einer Zweikomponentenmasse und eine Mühle zur Durchführung des Verfahrens.

Zweikomponentenmassen weisen als erste Komponente einen Klebstoff, eine Füllmasse, eine Spachtelmasse o.dgl. und als zweite Komponente einen Härter auf. Durch Vermischen der beiden Komponenten entsteht ein aushärtendes Gemisch. Das Verwenden von Zweikomponentenmassen hat jedoch den Nachteil, daß die Zweikomponentenmasse nach dem Mischen der beiden Komponenten nur innerhalb eines begrenzten Zeitraums verarbeitbar ist. Um ein Aushärten der Zweikomponentenmasse in einem Vorratsbehälter zu vermeiden, kann nur eine geringe Menge gemischt werden. Ein kontinuierliches Verarbeiten einer gemischten Zweikomponentenmasse über einen längeren Zeitraum ist nicht möglich.

Die beiden Komponenten der Zweikomponentenmasse müssen stets unmittelbar vor dem Verarbeiten gemischt werden, da die gemischte Zweikomponentenmasse nicht lagerfähig ist. Hierbei ist es nicht oder nur sehr schwer möglich, stets das exakte Mischungsverhältnis der beiden Komponenten einzuhalten. Von dem Mischungsverhältnis ist jedoch die Festigkeit der ausgehärteten Zweikomponentenmasse sowie die maximale Verarbeitungszeit abhängig. Bei einer Abweichung von dem entsprechenden Mischungsverhältnis ist beispielsweise die Festigkeit einer Verbindung zweier Bauteile nicht gewährleistet.

Aufgabe der Erfindung ist es, ein Verfahren zum Bereitstellen und Verarbeiten einer Zweikomponentenmasse zu schaffen, bei dem eine Zweikomponentenmasse im richtigen Mischungsverhältnis vorbereitet werden kann, lange bevor das Auftragen und Aushärten erfolgt.

Die Lösung dieser Aufgabe erfolgt erfindungsgemäß durch die Merkmale des Patentanspruchs 1 bzw. 6.

Bei dem erfindungsgemäßen Verfahren zum Bereitstellen und Verarbeiten einer Zweikomponentenmasse ist eine der beiden Komponenten verkapselt. Eine Reaktion und damit ein Aushärten der Zweikomponentenmasse findet erst statt, wenn die verkapselte Komponente, vorzugsweise der Härter, aufgebrochen wird. Die Verkapselung erfolgt vorzugsweise durch Mikrokapseln, d.h. Hohlkörper, die beispielsweise aus Wachs oder Kunststoff bestehen und in welchen der Härter enthalten ist.

Durch das Verkapseln einer der beiden Komponenten ist die vorgemischte Zweikomponentenmasse lagerfähig. Somit können die beiden Komponenten auf industriellem Wege gemischt werden und ein Mischungsverhältnis der beiden Komponenten kann genau eingestellt werden. Erfindungsgemäß wird die verkapselte Komponente erst direkt vor dem Auftragen der Zweikomponentenmasse in einer Mühle aufgebrochen und vermischt.

In einem Vorratsbehälter kann eine sehr große Menge einer bereits vorgemischten Zweikomponentenmasse bereitgestellt werden, da diese nicht aushärtet, so lange eine der beiden Komponenten verkapselt ist. Zum Verarbeiten wird die vorgemischte Zweikomponentenmasse aus dem Vorratsbehälter in die Mühle gefördert. In dieser werden die Kapseln aufgebrochen und die beiden Komponenten vermischt, so daß eine aushärtende Zweikomponentenmasse zum Auftragen bereitsteht. Um eine große Menge der Zweikomponentenmasse kontinuierlich verarbeiten zu können, wird die vorgemischte Zweikomponentenmasse aus dem Vorratsbehälter unter Druck kontinuierlich der Mühle zugeführt. Am Auslaß der Mühle ist ein Werkzeug zum Auftragen der Zweikomponentenmasse, wie beispielsweise eine Spritzvorrichtung, vorgesehen, mit der die kontinuierlich von der Mühle bereitgestellte Zweikomponentenmasse verarbeitet wird.

Zum Aufbrechen der Kapseln ist die Mühle so aufgebaut, daß auf die Kapseln Scherkräfte wirken. Vorzugsweise werden von einem Mahlkörper zusätzlich axiale Stoßbewegungen ausgeführt, um sicherzustellen, daß sämtliche Kapseln in der Mühle aufgebrochen werden.

Mit dem erfindungsgemäßen Verfahren werden vorzugsweise Zweikomponentenmassen auf Epoxydharz-, Polyurethan-, Polyester- oder Acrylharzbasis eingesetzt. Solche Zweikomponentenmassen können beispielsweise als Spachtelmasse, als Füllmasse oder als Klebstoff eingesetzt werden.

Zur Durchführung des Verfahrens kann eine Mühle verwendet werden, die einen in einer Kammer rotierenden Mahlkörper aufweist, von dem in der Kammer die verkapselte der beiden der Mühle zugeführten Komponenten aufgebrochen wird. Die Kammer ist mit einem Zuführkanal und einem Auslaßkanal verbunden, wobei durch den Zuführkanal die vorgemischte Zweikomponentenmasse der Kammer zugeführt und durch den Auslaßkanal die nach dem Aufbrechen der Kapseln aushärtbare Zweikomponentenmasse zum Auftragen abgeführt wird.

Vorzugsweise ist der Auslaßkanal der Mühle komplementär zu der Form eines rotierenden Mahlkörpers und so angeordnet, daß zwischen dem Auslaßkanal und dem Mahlkörper ein enger Spalt entsteht. Die Breite des Spalts ist kleiner als der minimale Kapseldurchmesser. Ferner haben ggf. in der unverkapselten Komponente der Zweikomponentenmasse enthaltene Füllstoffe kleinere Abmessungen als die Kapseln, so daß sichergestellt ist, daß sämtliche Kapseln aufgebrochen werden und nach dem Aufbrechen der Kapseln ein definiertes Mischungsverhältnis der beiden Komponenten vorliegt.

Der rotierende Mahlkörper kann zusätzlich mittels eines Vibrators axial bewegt werden. Durch die axialen Stoßbewegungen wird zusätzlich sichergestellt, daß sämtliche Kapseln in der Mühle aufgebrochen werden. Vorzugsweise ist der Auslaßkanal konisch, damit in dem Auslaßkanal ausgehärtete Zweikomponentenmasse auf einfache Weise von im nächsten Verarbeitungszyklus nachdrückender Zweikomponentenmasse aus dem Auslaßkanal ausgedrückt wird. Im Normalfall sind diese geringen Mengen ausgehärtete Masse nicht störend. Sollte dies der Fall sein, kann die bereits ausgehärtete Masse in einen Auffangbehälter ausgedrückt werden, so daß keine ausgehärtete Masse zur Verarbeitungsstelle gelangt.

Um das Aufbrechen der Kapseln in der Mühle zu erleichtern, kann nicht nur zwischen dem Auslaßkanal und dem Mahlkörper, sondern auch im Bereich des Auslaßkanals zwischen dem Mahlkörper und der Kammerinnenwand der Mühle ein enger Mahlspalt ausgebildet sein. Der Mahlspalt verengt sich vorzugsweise in Richtung Auslaßkanal, wobei der Mahlspalt in dem dem Auslaßkanal abgewandten Bereich breiter ist als der Kapseldurchmesser.

Bei einer weiteren bevorzugten Ausführungsform der Mühle ist das dem Mahlkörper zugewandte Ende des Zuführkanals entsprechend dem Auslaßkanal komplementär zu dem Mahlkörper ausgebildet, so daß zwischen Mahlkörper und Zuführkanal ein enger Mahlspalt ausgebildet ist. Dadurch werden die Kapseln bereits beim Eintritt in die Mühle aufgebrochen und die Zweikomponentenmasse wird in der Mühle homogen vermischt. Vorzugsweise weist die Mühle zusätzlich ein Gegenstück auf, in welches der Mahlkörper in eine Ausnehmung eingesetzt ist. Die Ausnehmung ist derart ausgebildet, daß zwischen dem Mahlkörper und dem Gegenstück ein enger Mahlspalt ausgebildet ist. Dies hat den Vorteil, daß nur eine geringe Menge aushärtbarer Zweikomponentenmasse in der Mühle ist.

Das erfindungsgemäße Verfahren eignet sich insbesondere zur Rohrsanierung, beispielsweise zur Sanierung von Abwasserkanälen. Um Kanalrohre, die Leckagen aufweisen, nicht auswechseln zu müssen, ist es bekannt, die entsprechenden Stellen mittels Dichtmasse abzudichten. Hierzu werden bei nicht begehbaren Kanalrohren Roboter eingesetzt, die in dem Kanalrohr verfahrbar sind und mittels einer Kamera die abzudichtende Stelle feststellen. Von dem Roboter wird die Dichtmasse mitgeführt und von einem entsprechenden Verspritzwerkzeug in die abzudichtende Stelle eingebracht. Bei Einsatz des erfindungsgemäßen Verfahrens kann die Zweikomponentenmasse vom Roboter mitgeführt oder über einen Schlauch dem Roboter zugeführt werden. Die verkapselte Komponente der Zweikomponentenmasse wird mittels einer am Roboter vorgesehenen Mühle aufgebrochen und vermischt. Es ist daher möglich, bei der Kanalrohrsanierung eine sehr große Menge bereits vorgemischter Zweikomponentenmasse bereitzustellen oder in einem am Roboter vorgesehenen Vorratsbehälter mitzuführen und erst unmittelbar vor dem Verarbeiten zu vermischen.

Nachfolgend wird die Erfindung anhand bevorzugter Ausführungsformen unter Bezugnahme auf die anliegenden Zeichnungen näher erläutert.

Es zeigen:
- Fig. 1: eine schematische Schnittansicht einer ersten bevorzugten Ausführungsform einer Mühle und
- Fig. 2: eine schematische Schnittansicht einer zweiten bevorzugten Ausführungsform der Mühle.

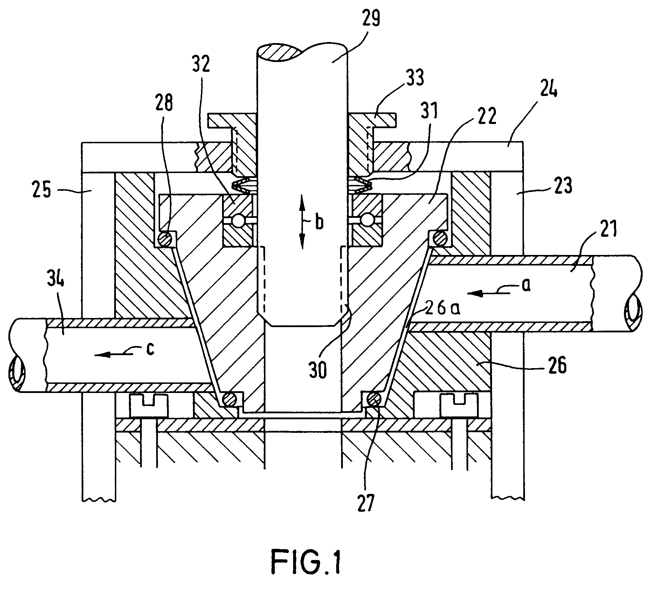

Eine in Fig. 1 dargestellte erste Ausführungsform einer Mühle weist einen mit einem Vorratsbehälter verbundenen Zuführkanal 21 auf. Die in dem Vorratsbehälter vorhandene vorgemischte Zweikomponentenmasse, deren eine Komponente verkapselt ist, wird der Mühle in Richtung des Pfeils a zugeführt. Das einem Mahlkörper 22 zugewandte Ende des Zuführkanals 21 ist komplementär zu dem kegelstumpfförmigen Mahlkörper 22 ausgebildet. Somit ist ein enger Mahlspalt zwischen dem Zuführkanal 21 und dem Mahlkörper 22 ausgebildet. Die Spaltbreite ist kleiner als der durchschnittliche Kapseldurchmesser. Ferner weist die Mühle in ihrem Gehäuse 23,24,25 ein Gegenstück 26 mit kegelstumpfförmiger Ausnehmung auf, die derart ausgebildet ist, daß bei in das Gegenstück 26 eingesetztem Mahlkörper 22 ein Mahlspalt zwischen dem Mahlkörper 22 und dem Gegenstück 26 entsteht, der dem Mahlspalt zwischen dem Zuführkanal 21 und dem Mahlkörper 22 entspricht. Der Mahlspalt zwischen dem Mahlkörper 22 und dem Gegenstück 26 bildet eine Kammer 26a aus, in der die verkapselte Komponente der Zweikomponentenmasse aufgebrochen und die beiden Komponenten vermischt werden. Das Gegenstück 26 ist so ausgebildet, daß im Mahlbereich des Mahlkörpers 22 stets ein gleichmäßiger Spalt gebildet ist.

Der Mahlbereich des Mahlkörpers 22 ist durch Dichtringe 27,28 begrenzt. Der Mahlkörper 22 wird über eine Welle 29, die über eine Nut 30 mit dem Mahlkörper 22 formschlüssig verbunden ist, mittels eines Motors angetrieben. Mittels Tellerfedern 31 wird der Mahlkörper 22 gegen die Dichtringe 27,28 gedrückt, um ein Austreten der Zweikomponentenmasse aus dem Mahlbereich zu verhindern. Hierzu drücken die Tellerfedern 31 gegen ein in dem Mahlkörper 22 angeordnetes Axialkugellager 32. Ferner ist die Druckkraft der Tellerfedern 31 über eine Mutter 33, die in einem Teil 24 des Mühlengehäuses angeordnet ist, einstellbar. Ferner kann an der Welle 29 ein Vibrator angeschlossen sein, der eine Axialbewegung des Mahlkörpers 22 in Richtung des Pfeils b und damit eine Änderung des Mahlspalts zwischen dem Mahlkörper 22 und dem Gegenstück 26 bewirkt. Hierbei wird die Frequenz der Stoßbewegung so gewählt, daß die Kapseln möglichst direkt nach dem Eintritt in die Mühle aufgebrochen werden, um sicherzustellen, daß am Ausgang der Mühle ein homogenes Gemisch vorliegt.

Die in dem Mahlspalt zwischen dem Mahlkörper 22 und dem Gegenstück 26 gemischte Zweikomponentenmasse wird durch einen Auslaßkanal 34 in Richtung des Pfeils c zu einem Werkzeug zum Auftragen der Zweikomponentenmasse befördert.

Zur Verbesserung der Fördereigenschaften der Mühle ist der Auslaßkanal 34 an einem kleineren Durchmesser des Mahlkörpers 22 angeordnet als der Zuführkanal 21.

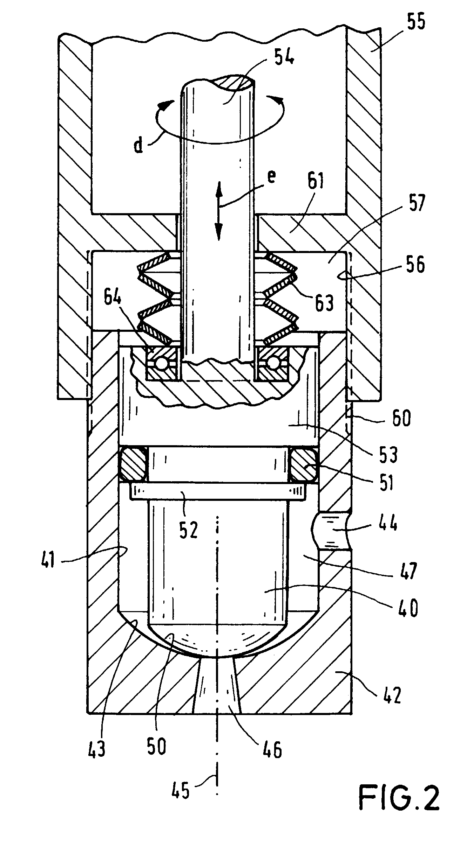

Die in Fig. 2 dargestellte zweite Ausführungsform der Mühle weist entsprechend der ersten Ausführungsform einen Mahlkörper 40 auf, der in einer Ausnehmung 41 eines Gehäuses 42 angeordnet ist. Die Ausnehmung 41 ist im wesentlichen zylindrisch ausgebildet, wobei die im Innern des Gehäuses 42 angeordneten Stirnfläche 43 der Ausnehmung 41 bzgl. der Ausnehmung 41 konvex ausgebildet ist. Im zylindrischen Bereich der Ausnehmung 41 weist das Gehäuse 42 einen Zuführkanal 44 auf, der mit einem Vorratsbehälter verbunden ist, in dem die vorgemischte Zweikomponentenmasse, deren eine Komponente verkapselt ist, enthalten ist. Symmetrisch zur Mittelachse 45 des Gehäuses 42 ist ein Auslaßkanal 46 ausgebildet, dessen dem Mahlkörper 40 zugewandtes Ende in der konkaven Stirnfläche 43 der Ausnehmung 41 angeordnet ist. Der Auslaßkanal 46 ist konisch ausgebildet, wobei der Durchmesser des Auslaßkanals 46 ausgehend von der Ausnehmung 41 nach außen zunimmt.

Der in der Ausnehmung 41 angeordnete Mahlkörper 40 ist im wesentlichen zylindrisch ausgebildet, wobei der Durchmesser im zylindrischen Bereich des Mahlkörpers 40 kleiner ist als der Durchmesser des zylindrischen Bereichs der Ausnehmung 41, so daß zwischen dem Mahlkörper 40 und dem Gehäuse 42 eine Kammer 47 ausgebildet ist. Die in Richtung des Auslaßkanals 46 weisenden Stirnfläche 50 des Mahlkörpers 40 ist konvex ausgebildet. Der Krümmungsradius der konvexen Stirnfläche 50 des Mahlkörpers 40 ist kleiner als der Krümmungsradius der konvexen Stirnfläche 43 der Ausnehmung 41, so daß zwischen den beiden konvexen Stirnflächen 43,50 ein Mahlspalt ausgebildet ist, der sich in Richtung des Auslaßkanals 46 verengt. Die Breite des Mahlspalts ist so wählbar, daß er im äußeren Bereich des Mahlkörpers 40 größer ist als der durchschnittliche Kapseldurchmesser und im inneren Bereich kleiner ist als der minimale Kapseldurchmesser. Dadurch entsteht innerhalb des Mahlspalts zwischen den beiden konvexen Stirnflächen 43,50 eine Förderwirkung in Richtung des Auslaßkanals 46.

Die Kammer 47 ist durch eine Dichtung 51 begrenzt, die zwischen dem Mahlkörper 40 und dem Gehäuse 42 angeordnet ist. Die Dichtung 51 wird in axialer Richtung durch einen in Richtung der Kammer 47 weisenden Ansatz 52 des Mahlkörpers 40 und durch einen auf der gegenüberliegenden Seite der Dichtung 51 angeordneten zylindrischen Fortsatz 53, der fest mit dem Mahlkörper 40 verbunden ist, gehalten. Der zylindrische Fortsatz 53 ist mit einer Welle 54 fest verbunden, die mittels eines Motors in Richtung des Pfeils d drehbar ist. Somit kann der Mahlkörper 40 mittels des Motors gedreht werden.

Die Welle 54 ist in einer Aufnahmeeinrichtung 55 angeordnet. Die Aufnahmeeinrichtung 55 weist eine mit einem Innengewinde 56 versehene Öffnung 57 auf, deren Innendurchmesser dem Außendurchmesser des zylindrischen Gehäuses 42 entspricht. Mittels eines an dem zylindrischen Gehäuse 42 vorgesehenen Gewindes 60 ist das Gehäuse 42 über das Innengewinde 56 fest mit der Aufnahmeeinrichtung 55 verbunden. Ferner weist die Aufnahmeeinrichtung 55 einen Steg 61 mit einer runden Öffnung 62 auf, durch die die Welle 54 ragt. Auf der dem zylindrischen Fortsatz 53 des Mahlkörpers 40 zugewandten Seite des Stegs 62 stützt sich ein Federpaket 63 ab, das gegen ein Axiallager 64 drückt, das in dem zylindrischen Fortsatz 53 des Mahlkörpers 40 angeordnet ist. Durch das Federpaket 63 wird der Mahlkörper 40 in Richtung des Auslaßkanals 46 gedrückt, so daß auf die in dem Mahlspalt zwischen den beiden konvexen Stirnflächen 43,50 vorhandenen Kapseln eine zum Aufbrechen der Kapseln ausreichende Kraft ausgeübt wird. Zum Einstellen dieser Kraft kann der Abstand zwischen dem zylindrischen Fortsatz 53 des Mahlkörpers 40 und dem Steg 62 der Aufnahmeeinrichtung 55 verändert werden, indem das Gehäuse 42 in die zylindrische Öffnung 57 der Aufnahmeeinrichtung 55 eingeschraubt oder herausgeschraubt wird.

Ferner ist mit der Welle 54 ein Vibrator verbunden, so daß die Welle 54 und damit der mit der Welle 54 fest verbundene Mahlkörper 40 in Richtung des Pfeils e bewegt werden kann. Durch die Bewegungen des Vibrators wird der Spalt zwischen den beiden konvexen Stirnflächen 43,50 zyklisch verändert, so daß zum Aufbrechen der Kapseln auf diese eine Druckkraft ausgeübt werden kann.

Zum Reinigen der Mühle kann das Gehäuse 42 beispielsweise vollständig aus der Aufnahmeeinrichtung 55 herausgeschraubt werden, so daß der Mahlkörper 40 aus der Ausnehmung 41 des Gehäuses herausgezogen und die Ausnehmung 41 des Gehäuses gereinigt werden kann. Soll lediglich vermieden werden, daß sich in dem Spalt zwischen den beiden konvexen Stirnflächen 43,50 aushärtbare Zweikomponentenmasse befindet, so ist es ausreichend, das Gehäuse 42 so weit aus der Aufnahmeinrichtung 55 herauszuschrauben, bis der Spalt zwischen den beiden konvexen Stirnflächen 43,50 größer als der maximale Durchmesser der Kapsel ist. Anschließend kann die in dem Spalt befindliche Menge aushärtender Zweikomponentenmasse über den Auslaßkanal 46 aus der Mühle herausgedrückt werden, indem über den Zuführkanal 44 Komponentenmasse mit einer verkapselten Komponente in die Kammer 47 gepreßt wird.

## Patentansprüche

1. Verfahren zum Bereitstellen und Verarbeiten einer Zweikomponentenmasse, deren Komponenten unmittelbar vor dem Auftragen vermischt werden, bei welchem die Zweikomponentenmasse eine der beiden Komponenten in verkapselter Form enthält und das Vermischen dadurch erfolgt, daß die Zweikomponentenmasse einer Mühle zugeführt wird, in der die verkapselte Komponente aufgebrochen wird.

2. Verfahren nach Anspruch 1, bei welchem die Zweikomponentenmasse der Mühle kontinuierlich unter Druck zugeführt wird.

3. Verfahren nach Anspruch 1 oder 2, bei welchem die Kapseln überwiegend durch Scherkräfte aufgebrochen werden.

4. Verfahren nach einem der Ansprüche 1-3, bei welchem von einem Mahlkörper eine axiale Stoßbewegung ausgeführt wird.

5. Verfahren nach einem der Ansprüche 1-4, bei welchem mindestens eine Komponente der Zweikomponentenmasse auf Epoxydharz oder auf Polyuretan oder auf Polyester oder auf Acrylharz basiert.

6. Mühle mit einem in einer Kammer (26a,47) rotierenden Mahlkörper (22,40), einem in die Kammer (26a,47) führenden Zuführkanal (21,44) und einem aus der Kammer (26a,47) führenden Auslaßkanal (34,46), gekennzeichnet durch ihre Verwendung in einem Verfahren nach einem der Ansprüche 1-5.

7. Mühle nach Anspruch 6, dadurch gekennzeichnet, daß das dem Mahlkörper (22,40) zugewandte Ende des Auslaßkanals (34,46) zu dem Mahlkörper (22,40) komplementär ist und so angeordnet ist, daß zwischen dem Auslaßkanal (34,46) und dem Mahlkörper (22,40) ein enger Spalt ausgebildet ist.

8. Mühle nach Anspruch 6 oder 7, dadurch gekennzeichnet, daß der Mahlkörper (22,40) mit einem Vibrator verbunden ist.

9. Mühle nach einem der Ansprüche 6-8, dadurch gekennzeichnet, daß der Auslaßkanal (34,46) konisch ist.

10. Mühle nach einem der Ansprüche 6-9, dadurch gekennzeichnet, daß im Bereich des Auslaßkanals (46) zwischen Mahlkörper (40) und Kammerinnenwand (43) ein sich in Richtung des Auslaßkanals (46) verengender Mahlspalt vorgesehen ist.

11. Mühle nach einem der Ansprüche 6-10, dadurch gekennzeichnet, daß das dem Mahlkörper (22,40) zugewandte Ende des Zuführkanals (21,44) zu dem Mahlkörper (22,40) komplementär ist.

12. Mühle nach einem der Ansprüche 6-11, dadurch gekennzeichnet, daß der Mahlkörper (22) in einer Ausnehmung eines Gegenstücks (26) derart angeordnet ist, daß zwischen dem Mahlkörper (22) und dem Gegenstück (26) ein enger Mahlspalt ausgebildet ist.

13. Mühle nach einem der Ansprüche 6-12, dadurch gekennzeichnet, daß der Mahlkörper (22) kegelstumpfförmig ist.

14. Mühle nach einem der Ansprüche 6-13, dadurch gekennzeichnet, daß der Auslaßkanal (34) an einem kleineren Durchmesser des Mahlkörpers (22) angeordnet ist als der Zuführkanal (21).

15. Mühle nach einem der Ansprüche 6-14, gekennzeichnet durch ihre Verwendung bei der Kanalrohrsanierung, wobei die Mühle an einem Roboter vorsehbar ist.
